# EUROPEAN PATENT APPLICATION

(11) **EP 2 963 533 A1**
(43) Date of publication of application: **06.01.2016**
(21) Application number: 14756790.3
(22) Date of filing: 26.02.2014
(51) Int. Cl.: G06F 3/0485, G06F 3/0488

(54) **ELECTRONIC DEVICE, CONTROL METHOD, AND CONTROL PROGRAM**

(30) Priority: 27.02.2013 JP 2013037919
(71) Applicant: Kyocera Corporation, Kyoto-shi, Kyoto 612-8501 (JP)
(72) Inventor: NODA, Masanobu, Kyoto-shi Kyoto 612-8501 (JP)
(74) Representative: Schwabe - Sandmair - Marx
(86) International application number: PCT/JP2014/054734
(87) International publication number: WO 2014/133030

(57) **Abstract**

An electronic device (e.g., smartphone) (1) includes a touch screen display (2) and a controller (10). The touch screen display (2) displays a scrollable first screen. The controller (10) operable to causes the touch screen display (2) to display a second object for scrolling the first screen, when a displaying part of the first screen includes a first object for displaying a second screen. The controller (10) may cause the touch screen display (2) not to display the second object when the displaying part of the first screen does not include the first object.

## Description

### Field

The present application relates to an electronic device, a control method, and a control program. Particularly, the present application relates to an electronic device with a touch screen, a control method for controlling the electronic device, and a control program for controlling the electronic device.

### Background

A touch screen device with a touch screen display has been known. Examples of the touch screen device include, but are not limited to, a smartphone and a tablet. The touch screen device detects a gesture with a finger, a pen, or a stylus pen through the touch screen. The touch screen device operates according to the detected gesture. An example of the operation according to the detected gesture is described in, for example, Patent Literature 1.

The basic operation of the touch screen device is implemented by an OS (Operating System) built into the device. Examples of the OS built into the touch screen device include, but are not limited to, Android (registered trademark), BlackBerry (registered trademark) OS, iOS, Symbian (registered trademark) OS, and Windows (registered trademark) Phone.

### Citation List

### Patent Literature

Patent Literature 1: International Publication Pamphlet No. 2008/086302

### Summary

### Technical Problem

There are some touch screen devices that scroll a screen displayed on a touch screen display according to a gesture performed on the touch screen display. However, processing for any gesture other than the scroll may be assigned to the screen. Therefore, even though a user is attempting to perform a gesture to scroll the screen, the touch screen device may perform other processing assigned to an object displayed on the screen.

For the foregoing reasons, there is a need for an electronic device, a control method, and a control program capable of reducing a possibility that the gesture for scrolling the screen is erroneously determined as a gesture for another processing.

### Solution to Problem

According to an aspect of the present invention, an electronic device is provided, the electronic device includes a touch screen display operable to display a scrollable first screen; and a controller operable to cause the touch screen display to display a second object for scrolling the first screen if a displaying part of the first screen includes a first object for displaying a second screen.

According to another aspect of the present invention, a method of controlling an electronic device including a touch screen display is provided and the method includes the steps of causing the touch screen display to display a scrollable first screen; and causing the touch screen display to display a second object for scrolling the first screen if a displaying part of the first screen includes a first object for displaying a second screen.

According to another aspect of the present invention, a control program of causing an electronic device including a touch screen display to execute a procedure is provided, and the procedure includes the steps of: causing the touch screen display to display a scrollable first screen; and causing the touch screen display to display a second object for scrolling the first screen if a displaying part of the first screen includes a first object for displaying a second screen.

### Brief Description of Drawings

FIG. 1 is a perspective view of a smartphone according to an embodiment.
FIG. 2 is a front view of the smartphone.
FIG. 3 is a back view of the smartphone.
FIG. 4 is a block diagram of the smartphone.
FIG. 5 is a diagram of examples of a first object and a second object.
FIG. 6 is a diagram of an example of display control performed by the smartphone.
FIG. 7 is a flowchart of an example of a procedure of the display control performed by the smartphone.
FIG. 8 is a diagram of a first modification of the second object.
FIG. 9 is a diagram of a second modification of the second object.

### Description of Embodiments

Exemplary embodiments for implementing the present embodiment will be explained in detail below with reference to the accompanying drawings. A smartphone will be explained below as an example of the electronic device with a touch screen.

### Embodiments

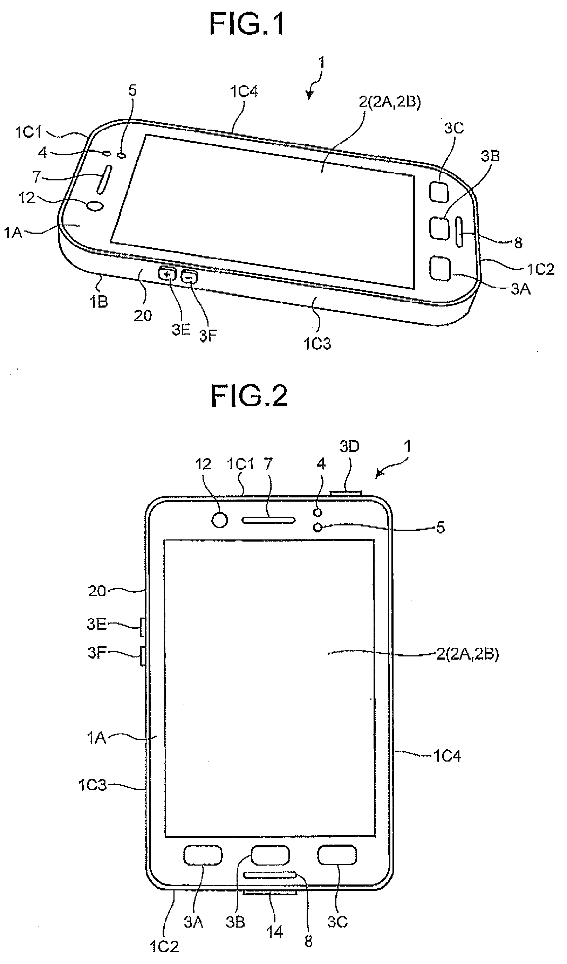

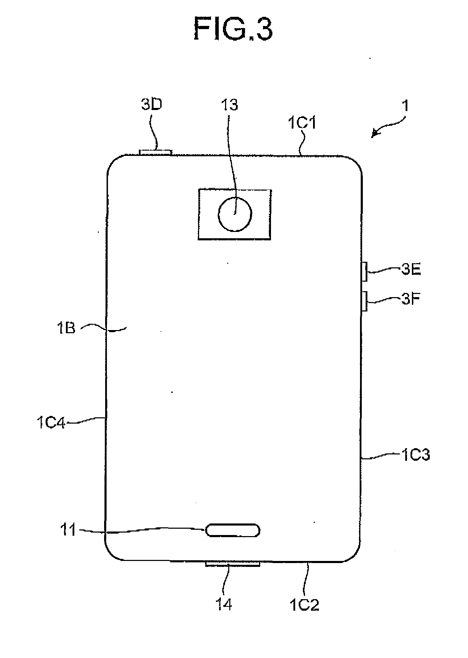

An overall configuration of a smartphone 1 according to an embodiment will be explained with reference to FIG. 1 to FIG. 3. As illustrated in FIG. 1 to FIG. 3, the smartphone 1 includes a housing 20. The housing 20 includes a front face 1A, a back face 1B, and side faces 1C1 to 1C4. The front face 1A is a front of the housing 20. The back face 1B is a back of the housing 20. The side faces 1C1 to 1C4 are sides each connecting the front face 1A and the back face 1B. Hereinafter, the side faces 1C1 to 1C4 may be collectively called "side face 1C" or "side faces 1C" without being specific to any of the side faces.

The smartphone 1 includes a touch screen display 2, buttons 3A to 3C, an illumination sensor 4, a proximity sensor 5, a receiver 7, a microphone 8, and a camera 12, which are provided in the front face 1A. The smartphone 1 includes a speaker 11 and a camera 13, which are provided in the back face 1B. The smartphone 1 includes buttons 3D to 3F and a connector 14, which are provided in the side face 1C. Hereinafter, the buttons 3A, to 3F may be collectively called "button 3" or "buttons 3" without being specific to any of the buttons.

The touch screen display 2 includes a display 2A and a touch screen 2B. In an example of FIG. 1, each of the display 2A and the touch screen 2B is approximately rectangular-shaped; however, the shapes of display 2A and the touch screen 2B are not limited thereto. Each of the display 2A and the touch screen 2B may have any shape such as a square or a circle. In an example of FIG. 1, the display 2A and the touch screen 2B are located in a superimposed manner; however, the location of the display 2A and the touch screen 2B is not limited thereto. The display 2A and the touch screen 2B may be located, for example, side by side or apart from each other. In an example of FIG. 1, longer sides of the display 2A are along longer sides of the touch screen 2B respectively, and shorter sides of the display 2A are along shorter sides of the touch screen 2B respectively; however, the manner in which the display 2A and the touch screen 2B are superimposed is not limited thereto. If the display 2A and the touch screen 2B are located in the superimposed manner, they can be configured such that, for example, one or more sides of the display 2A do not have to be along any of the sides of the touch screen 2B.

The display 2A includes a display device such as an LCD (Liquid Crystal Display), an OELD (Organic Electro-Luminescence Display), or an IELD (Inorganic Electro-Luminescence Display). The display 2A can display text, images, symbols, graphics, and the like.

The touch screen 2B can detect a contact of a finger, a pen, a stylus pen, or the like on the touch screen 2B. The touch screen 2B can detect positions where a plurality of fingers, pens, stylus pens, or the like make contact with the touch screen 2B. In the following explanation, the finger, the pen, the stylus pen, or the like that is in contact with the touch screen 2B may be called "contact object" or "contact thing".

The detection method of the touch screen 2B may be any detection method of a capacitive type detection method, a resistive type detection method, a surface acoustic wave type (or ultrasonic type) detection method, an infrared type detection method, an electromagnetic induction type detection method, and a load sensing type detection method. In the description herein below, for the sake of simplicity, it is assumed that the user uses his/her finger(s) to make contact with the touch screen 2B in order to operate the smartphone 1.

The smartphone 1 can determine a type of a gesture based on at least one of a contact detected by the touch screen 2B, a position where the contact is detected, a change of a position where the contact is detected, an interval between detected contacts, and the number of detection times of the contact. The gesture is an operation performed on the touch screen 2B. Examples of the gesture determined by the smartphone 1 include, but are not limited to, touch, long touch, release, swipe, tap, double tap, long tap, drag, flick, pinch-in, and pinch-out.

"Touch" is a gesture in which a finger makes contact with the touch screen 2B. The smartphone 1 can determine a gesture in which the finger makes contact with the touch screen 2B as touch. "Long touch," is a gesture in which a finger makes contact with the touch screen 2B for longer than a given time. The smartphone 1 can determine a gesture in which the finger makes contact with the touch screen 2B for longer than a given time as long touch.

"Release" is a gesture in which a finger separates from the touch screen 2B. The smartphone 1 can determine a gesture in which the finger separates from the touch screen 2B as release. "Swipe" is a gesture in which a finger moves on the touch screen 2B with continuous contact thereon. The smartphone 1 can determine a gesture in which the finger moves on the touch screen 2B with continuous contact thereon as swipe.

"Tap" is a gesture in which a touch is followed by a release. The smartphone 1 can determine a gesture in which a touch is followed by a release as tap. "Double tap" is a gesture such that a gesture in which a touch is followed by a release is successively performed twice. The smartphone 1 can determine a gesture such that a gesture in which a touch is followed by a release is successively performed twice as double tap.

"Long tap" is a gesture in which a long touch is followed by a release. The smartphone 1 can determine a gesture in which a long touch is followed by a release as long tap. "Drag" is a gesture in which a swipe is performed from an area where a movable-object is displayed. The smartphone 1 can determine a gesture in which a swipe is performed from an area where the movable-object is displayed as drag.

"Flick" is a gesture in which a finger separates from the touch screen 2B while moving after making contact with the touch screen 2B. That is, "Flick" is a gesture in which a touch is followed by a release accompanied with a movement of the finger. The smartphone 1 can determine a gesture in which the finger separates from the touch screen 2B while moving after making contact with the touch screen 2B as flick. The flick is performed, in many cases, with a finger moving along one direction. The flick includes "upward flick" in which the finger moves upward on the screen, "downward flick" in which the finger moves downward on the screen, "rightward flick" in which the finger moves rightward on the screen, and "leftward flick" in which the finger moves leftward on the screen, and the like. Movement of the finger during the flick is, in many cases, quicker than that of the finger during the swipe.

"Pinch-in" is a gesture in which a swipe with a plurality of fingers is performed in a direction to move the fingers toward each other. The smartphone 1 can determine a gesture in which the distance between a position of one finger and a position of another finger detected by the touch screen 2B becomes shorter as pinch-in. "Pinch-out" is a gesture in which a swipe with a plurality of fingers is performed in a direction to move the fingers away from each other. The smartphone 1 can determine a gesture in which the distance between a position of one finger and a position of another finger detected by the touch screen 2B becomes longer as pinch-out.

In the description herein below, a gesture performed by using a finger may be referred to as a "single touch gesture", and a gesture performed by using a plurality of fingers may be referred to as a "multi-touch gesture" . Examples of the multi-touch gesture include a pinch-in and a pinch-out. A tap, a flick, a swipe, and the like are a single touch gesture when performed by using a finger, and are a multi-touch gesture when performed by using a plurality of fingers.

The smartphone 1 performs operations according to these gestures which are determined through the touch screen 2B. Therefore, user-friendly and intuitive operability is achieved. The operations performed by the smartphone 1 according to the determined gestures may be different depending on the screen displayed on the display 2A. In the following explanation, for the sake of simplicity of explanation, the fact that the touch screen detects the contact(s) and then the smartphone determines the type of the gesture as X based on the contact (s) may be simply described as "the smartphone detects X" or "the controller detects X".

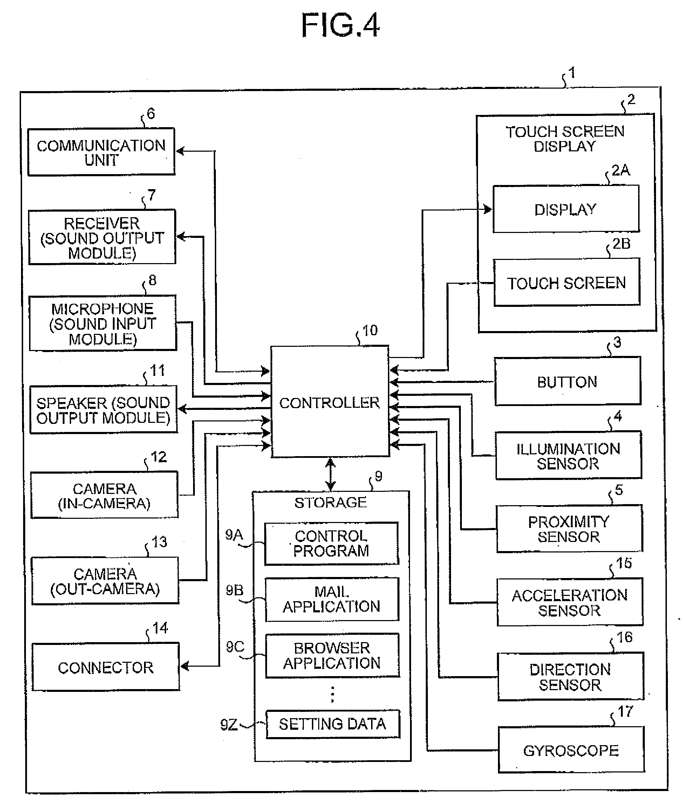

FIG. 4 is a block diagram of the smartphone 1. The smartphone 1 includes the touch screen display 2, the button 3, the illumination sensor 4, the proximity sensor 5, a communication unit 6, the receiver 7, the microphone 8, a storage 9, a controller 10, the speaker 11, the cameras 12 and 13, the connector 14, an acceleration sensor 15, a direction (orientation) sensor 16, and a gyroscope 17.

The touch screen display 2 includes, as explained above, the display 2A and the touch screen 2B. The display 2A displays text, images, symbols, graphics, or the like. The touch screen 2B detects contact (s). The controller 10 detects a gesture performed on the smartphone 1. Specifically, the controller 10 detects an operation (which may be a gesture) for the touch screen 2B (or the touch screen display 2) in cooperation with the touch screen 2B.

The button 3 is operated by the user. The button 3 includes a button 3A to a button 3F. The controller 10 detects an operation for the button 3 in cooperation with the button 3. Examples of the operations for the button 3 include, but are not limited to, a click, a double click, a triple click, a push, and a multi-push.

The buttons 3A to 3C are, for example, a home button, a back button, or a menu button. The button 3D is, for example, a power on/off button of the smartphone. 1. The button 3D may function also as a sleep/sleep release button. The buttons 3E and 3F are, for example, volume buttons.

The illumination sensor 4 detects illumination of the ambient light of the smartphone 1. The illumination indicates intensity of light, lightness, or brightness. The illumination sensor 4 is used, for example, to adjust the brightness of the display 2A. The proximity sensor 5 detects the presence of a nearby object without any physical contact. The proximity sensor 5 detects the presence of the object based on a change of the magnetic field, a change of the return time of the reflected ultrasonic wave, etc. The proximity sensor 5 detects that, for example, the touch screen display 2 is brought close to someone's face. The illumination sensor 4 and the proximity sensor 5 may be configured as one sensor. The illumination sensor 4 can be used as a proximity sensor.

The communication unit 6 performs communication via radio waves. A communication system supported by the communication unit 6 is wireless communication standard. The wireless communication standard includes, for example, a communication standard of cellar phones such as 2G, 3G, and 4G. The communication standard of cellar phones includes, for example, LTE (Long Term Evolution), W-CDMA (Wideband Code Division Multiple Access), CDMA 2000, PDC (Personal Digital Cellular), GSM (registered trademark) (Global System for Mobile Communications), and PHS (Personal Handy-phone System). The wireless communication standard further includes, for example, WiMAX (Worldwide Interoperability for Microwave Access), IEEE 802.11, Bluetooth (registered trademark), IrDA (Infrared Data Association), and NFC (Near Field Communication). The communication unit 6 may support one or more communication standards.

The receiver 7 and the speaker 11 are sound output modules. The receiver 7 and the speaker 11 output a sound signal transmitted from the controller 10 as sound. The receiver 7 is used, for example, to output the voice of the other party on the phone. The speaker 11 is used, for example, to output a ring tone and music. One of the receiver 7 and the speaker 11 may double as the other function. The microphone 8 is a sound input module. The microphone 8 converts speech of the user or the like to a sound signal and transmits the converted signal to the controller 10.

The storage 9 stores programs and data. The storage 9 is used also as a work area that temporarily stores a processing result of the controller 10. The storage 9 may include any non-transitory storage medium such as a semiconductor storage medium and a magnetic storage medium. The storage 9 may include a plurality type of storage mediums. The storage 9 may include a combination of a portable storage medium such as a memory card, an optical disc, or a magneto-optical disc with a reader of the storage medium. The storage 9 may include a storage device used as a temporary storage area such as RAM (Random Access Memory).

Programs stored in the storage 9 include applications executed in the foreground or the background and a control program for assisting operations of the applications. The application causes the controller 10, for example, to display a screen on the display 2A and perform processing according to a gesture detected through the touch screen 2B. The control program is, for example, an OS. The applications and the control program may be installed in the storage 9 through wireless communication by the communication unit 6 or through a non-transitory storage medium.

The storage 9 stores, for example, a control program 9A, a mail application 9B, a browser application 9C, and setting data 9Z. The mail application 9B provides an e-mail function for composing, transmitting, receiving, and displaying an e-mail, and the like. The browser application 9C provides a WEB browsing function for displaying WEB pages. The setting data 9Z contains information related to various settings on the operations of the smartphone 1.

The control program 9A provides a function related to various controls causing the smartphone 1 to work. The control program 9A controls to cause, for example, the communication unit 6, the receiver 7, and the microphone 8 to establish a phone call. The function provided by the control program 9A includes a function for performing various controls such as a change of information displayed on the display 2A according to the gesture detected through the touch screen 2B. The functions provided by the control program 9A can be used in combination with a function provided by the other program such as the mail application 9B.

The controller 10 is a processor. Examples of the processor include, but are not limited to, a CPU (Central Processing Unit), SoC (System-on-a-chip), an MCU (Micro Control Unit), and an FPGA (Field-Programmable Gate Array). The controller 10 integrally controls the operations of the smartphone 1 to implement various functions.

Specifically, the controller 10 executes instructions contained in the program stored in the storage 9 while referring to the data stored in the storage 9 as necessary. The controller 10 controls a function module according to the data and the instructions to thereby implement the various functions. Examples of the function module include, but are not limited to, the display 2A, the communication unit 6, the receiver 7, and the speaker 11. The controller 10 can change the control according to the detection result of a detector. Examples of the detector include, but are not limited to, the touch screen 2B, the button 3, the illumination sensor 4, the proximity sensor 5, the microphone 8, the camera 12, the camera 13, the acceleration sensor 15, the direction sensor 16, and the gyroscope 17.

The controller 10 executes, for example, the control program 9A to perform the various controls such as the change of the information displayed on the display 2A according to the gesture detected through the touch screen 2B.

The camera 12 is an in-camera for photographing an object facing the front face 1A. The camera 13 is an out-camera for photographing an object facing the back face 1B.

The connector 14 is a terminal to which other device is connected. The connector 14 may be a general-purpose terminal such as a USB (Universal Serial Bus), an HDMI (registered trademark) (High-Definition Multimedia Interface), Light Peak (Thunderbolt (registered trademark)), and an earphone/microphone connector. The connector 14 may be a dedicated terminal such as a dock connector. Examples of the devices connected to the connector 14 include, but are not limited to, an external storage, a speaker, and a communication device.

The acceleration sensor 15 detects a direction and a magnitude of acceleration applied to the smartphone 1. The direction sensor 16 detects a direction of geomagnetism. The gyroscope 17 detects an angle and an angular velocity of the smartphone. 1. The detection results of the acceleration sensor 15, the direction sensor 16, and the gyroscope 17 are used in combination with each other in order to detect a position of the smartphone. 1 and a change of its attitude.

Part or all of the programs and the data stored in the storage 9 in FIG. 4 may be downloaded from any other device through wireless communication by the communication unit 6. Part or all of the programs and the data stored in the storage 9 in FIG. 4 may be stored in the non-transitory storage medium that can be read by the reader included in the storage 9. Part or all of the programs and the data stored in the storage 9 in FIG. 4 may be stored in the non-transitory storage medium that can be read by a reader connected to the connector 14. Examples of the non-transitory storage mediums include, but are not limited to, an optical disc such as CD (registered trademark), DVD (registered trademark), and Blu-ray (registered trademark), a magneto-optical disc, magnetic storage medium, a memory card, and solid-state storage medium.

The configuration of the smartphone 1 illustrated in FIG. 4 is only an example, and therefore it can be modified as required within a scope that does not depart from the gist of the present invention. For example, the number and the type of the button 3 are not limited to an example of FIG. 4. The smartphone 1 may be provided with buttons of a numeric keypad layout or a QWERTY layout and so on as buttons for operations of the screen instead of the buttons 3A to 3C. The smartphone. 1 may be provided with only one button to operate the screen, or with no button. In an example illustrated in FIG. 4, the smartphone 1 is provided with two cameras; however, the smartphone 1 may be provided with only one camera or with no camera. In an example of FIG. 4, the smartphone. 1 is provided with three types of sensors in order to detect its position and attitude; however, the smartphone 1 does not have to be provided with some of the sensors. Alternatively, the smartphone 1 may be provided with any other type of sensor for detecting at least one of the position and the attitude.

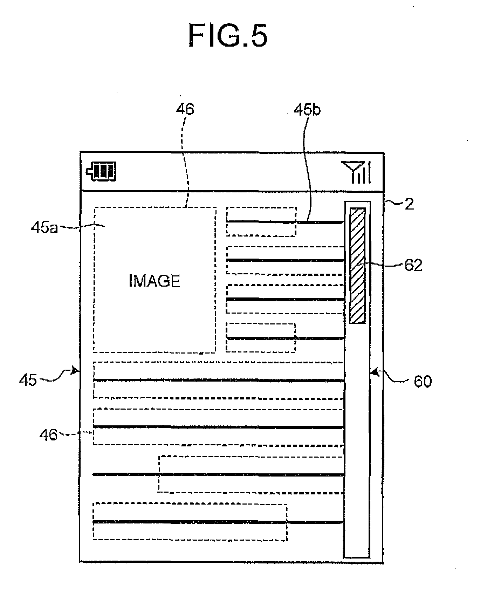

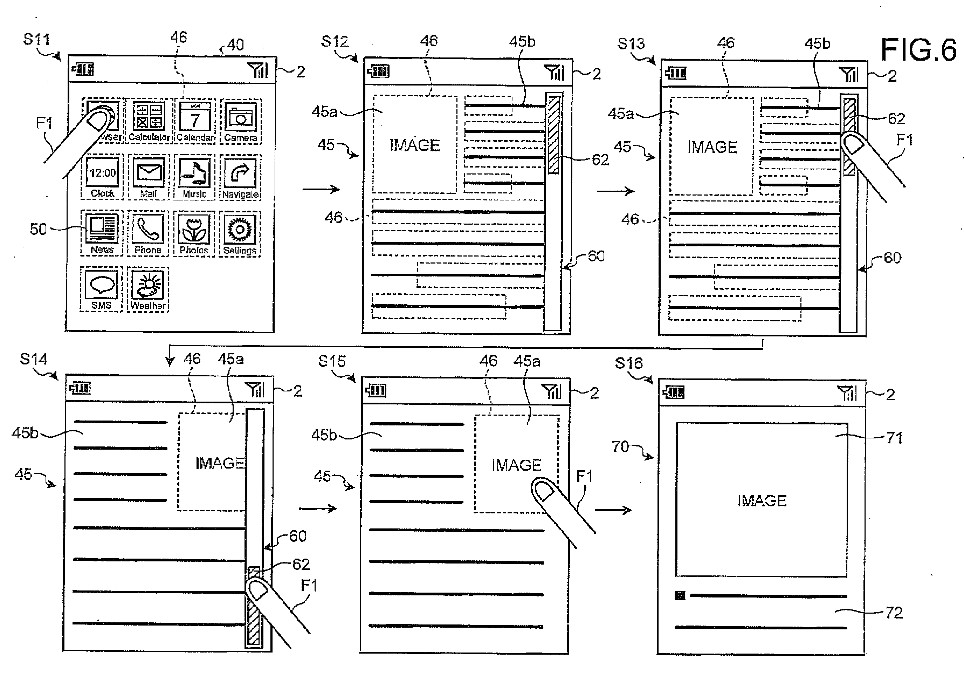

An example of the display control performed by the smartphone 1 will be explained below with reference to FIG. 5 and FIG. 6. The smartphone 1 controls the displaying of a second object based on the state of a first object in a displaying part of the screen. The displaying part of the screen is a part, of the screen which is beyond a display range of the display 2A, within the display range of the display 2A. The smartphone 1 displays a part of the screen included in the display range of the display 2A. For example, if a length of the screen is longer than the display range of the display 2A in any one of directions, the screen is determined as a screen that does not fall within the display range of the display 2A. The smartphone 1 can display the screen beyond the displaying part displayed on the display 2A, by moving the displaying area. The first object is an object, of objects included in the screen, to which an event is assigned so that predetermined processing is performed through the operation. ' In a description herein below, an event to display other screen is assumed to be assigned to the first object. A case where a transition to a screen different from the displayed screen is performed and a case where a new screen is added to the displayed screen are determined as display of other screen. The second object is an object to which a scroll function of the displaying area is assigned.

FIG. 5 is a diagram of examples of the first object and the second object. In an example illustrated in FIG. 5, a screen 45 which is a scrollable screen is displayed on the display 2A. The scrollable screen is a screen having a larger area than the display 2A. The displaying part of the screen 45 changes according to a scroll operation.

The screen 45 includes objects such as an image 45a and a text 45b. Whole or part of the objects such as the image 45a and the text 45b functions as the first object for displaying other screen. Various types of objects such as buttons and icons in addition to the image 45a and the text 45b may also function as the first object.

A region 46 where the objects such as the image 45a and the text 45b function as the first object is determined by the smartphone 1. The region 46 where the objects function as the first object is set so that the objects are substantially superimposed on the area where the objects are displayed. The region 46 where the objects function as the first object may be set larger than the area where the objects are displayed in order to facilitate the user's operation. When detecting a predetermined gesture performed on the region 46 that functions as the first object, the smartphone 1 displays other screen associated with the first object.

For example, when the screen 45 is a WEB page displayed based on data in an HTML (Hypertext Markup Language) format, the smartphone 1 determines the region 46 that functions as the first object based on an anchor tag included in the data in the HTML format. Moreover, the smartphone 1 determines a screen to be displayed when an input for the region 46 that functions as the first object is accepted, based on an attribute, or the like, of the anchor tag included in the data in the HTML format. When detecting a predetermined gesture in the region 46 that functions as the first object, the smartphone 1 accepts the gesture as an input for the region 46 that functions as the first object.

An area ratio between the region 46 that functions as the first object and the other area in the displaying part of the screen 45 fluctuates according to a size and an aspect ratio of the display 2A, a display magnification factor of the screen 45, a position and a range of the displaying part in the screen 45, and the like. In an example illustrated in FIG. 5, in the displaying part of the screen 45, respective areas around the image 45a and the text 45b surrounded by broken lines are the regions 46 that function as the first object.

In an example illustrated in FIG. 5, an area ratio of the regions 46 that function as the first object to the displaying part of the screen 45 is high. Therefore, when the user performs a gesture of scrolling the screen 45 on the touch screen 2B, this may cause an accidental touch on the region 46 that functions as the first object, and other screen is quite likely to be displayed without user's intention.

Thus, when the area ratio of the regions 46 that function as the first object to the displaying part of the screen 45 is high, the smartphone 1 displays the second object on the display 2A for allowing the user to scroll the screen 45. In an example illustrated in FIG. 5, the second object is a scroll bar 60 vertically displayed along the right edge of the screen 45.

The scroll bar 60 includes a slider 62. The slider 62 represents a position of the displaying part in the screen 45, an area ratio of the displaying part to the whole of the screen 45, and the like. When detecting a gesture of vertically moving the slider 62, the smartphone 1 changes the displaying position of the slider 62 according to the gesture. Moreover, the smartphone 1 vertically scrolls the screen 45 in accordance with the displaying position of the slider 62. (the smartphone 1 changes the displaying part of the screen 45.) By displaying the scroll bar 60 in this manner, the user can perform the scroll operation without any incorrect touch on the region 46 that functions as the first object.

It is determined, based on a threshold, whether the area ratio of the region 46 that functions as the first object to the displaying part of the screen 45 is high. The threshold may be a value corresponding to the area ratio of the region 46 that functions as the first object to the displaying part, or may be a value corresponding to the area of the region 46 that functions as the first object in the displaying part. The threshold is previously set by finding out, for example, a possibility that an erroneous operation for the first object occurs during the scroll operation using various screens and by analyzing the area ratio of the region 46 that functions as the first object to a screen where the possibility that the erroneous operation occurs is larger than a predetermined value. The threshold may be a value that the user can adjust.

When the area ratio of the region 46 that functions as the first object to the displaying part of the screen 45 is not high, the scroll bar 60 is not displayed. Therefore, if there is a low possibility that the first object is incorrectly touched, the smartphone 1 can provide more information to the user by using a wider area to display the screen 45.

The display control performed by the smartphone 1 will be explained in more detail below with reference to FIG. 6. FIG. 6 is a diagram of an example of the display control performed by the smartphone 1. At Step S11, the smartphone 1 displays a home screen 40 on the touch screen display 2 (or display 2A). The home screen 40 is a screen for allowing the user to select which one of the applications installed in the smartphone 1. And the smartphone execute a selected application.

A plurality of icons 50 are arranged on the home screen 40. Each of the icons 50 is associated with an application installed in the smartphone 1. When detecting a tap on an icon 50, the smartphone 1 executes the corresponding application and displays a screen provided by the corresponding application on the display 2A. In other words, the icon 50 in the home screen 40 is the first object, and an area around the area where the respective icons 50 are displayed is processed as the region 46 that functions as the first object.

The home screen 40 includes a plurality of pages, and can be scrolled on a page-by-page basis. Therefore, when the area ratio of the region 46 that functions as the first object to the home screen 40 is high, the scroll bar 60 or the like is displayed as the second object. The second object is not displayed in an example illustrated in FIG. 6.

At Step S11, a user's finger F1 taps on an icon 50 associated with the browser application 9C. When detecting the tap on the icon 50, the smartphone 1 executes the browser application 9C, and displays a screen provided by the browser application 9C. For example, the smartphone 1, acquires a WEB page through internet communication using the communication unit 6, and displays the screen indicating the content of the WEB page on the display 2A, based on the function provided by the browser application 9C. As a result, at Step S12, the screen 45 similar to that of FIG. 5 is displayed on the display 2A. The screen 45 is a scrollable screen as explained above.

The smartphone 1 specifies the first object included in the displaying part of the screen 45. The smartphone 1 calculates the region 46 that functions as the first object in the displaying part, i.e., a region that accepts an operation performed on the specified first object, based on the attribute of the first object. Examples of the attribute of the first object include, but are not limited to, a font size, a character length, an image size, and a display magnification factor. The smartphone 1 determines whether the area ratio of the region 46 that functions as the first object to the displaying part of the screen 45 is high. At Step S12, the smartphone 1 determines that the area ratio of the region 46 that functions as the first object to the displaying part of the screen 45 is high, and displays the scroll bar 60 as the second object on the display 2A.

At Step S13, the user's finger F1 moves the slider 62 of the scroll bar 60 downward. When detecting a gesture of moving the slider 62 downward through the touch screen 2B, the smartphone 1 scrolls the screen 45 downward in accordance with the displaying position of the slider 62 while changing the displaying position of the slider 62.

By displaying the scroll bar 60 in this manner, the smartphone 1 can reduce the possibility that the user incorrectly touches the region 46 that functions as the first object during scroll operation.

The smartphone 1 maintains a state of displaying the second object or a state of not displaying the second object during scroll of the screen 45. In other words, it is not configured that the smartphone 1 displays or deletes the second object in the middle of the scrolling even if the area ratio of the region 46 that functions as the first object to the displaying part of the screen 45 is changed during scrolling.

"During scrolling means a period during which the displaying part of the screen 45 is changing or a period during which the operation for changing the displaying part of the screen 45 is continued. For example, when the screen 45 is scrolled according to a flick operation, a period until when the scroll of the screen 45 started according to a speed of the flick operation or so is stopped is included in "during scrolling" even after the flick operation is completed. For example, when the screen 45 is scrolled according to a drag operation, a period until when the release of the finger is detected is included in "during scrolling" even if the movement of the finger during drag operation is stopped or the scroll of the screen 45 is stopped. In the following explanation, "period in scrolling is completed" may be described as "scrolling is completed".

In this way, by maintaining the state of displaying the second object or the state of not displaying the second object during scrolling, it is possible to reduce the possibility that a possible scroll operation is changed in the middle of the scrolling and this makes the user be confused.

Moreover, when the second object is displayed during scrolling, the smartphone 1 maintains the state of displaying the second object for a predetermined time even after the completion of the scrolling. Because of this, if the user temporarily suspends the scroll operation, the smartphone 1 can give the user an opportunity to continuously perform the same scroll operation. When the second object is not displayed during scrolling, the smartphone 1 may maintain the state of not displaying the second object for the predetermined time after the completion of the scrolling even if the area ratio of the region 46 that functions as the first object to the displaying part of the screen 45 is high.

At Step S14, the user's finger F1 moves the slider 62 of the scroll bar 60 to a lower end. Therefore, the smartphone 1 changes the displaying part of the screen 45 to the lower end portion of the screen 45 and stops the change. At this step, because the finger F1 is not released yet, the smartphone 1 maintains the state of displaying the second object.

Thereafter, when detecting the release of the finger F1, the smartphone 1 determines that the scroll is completed. The smartphone 1 then determines whether the area ratio of the region 46 that functions as the first object to the displaying part of the screen 45 is high. At Step S15, the smartphone 1 determines that the area ratio of the region 46 that functions as the first object to the displaying part of the screen 45 is not high, and deletes the scroll bar 60 from the display 2A after the state of the display is maintained for the predetermined time.

The image 45a functions as the first object in the lower end portion of the screen 45. At Step S15, the user's finger F1 taps on the region 46 of the image 45a that functions as the first object. When detecting the tap on the region 46, as illustrated at Step S16, the smartphone 1 displays a screen 70 associated with the first object corresponding to the region 46 on the display 2A. The screen 70 displays information such as an image 71 and a text 72.

The screen 70 is not a scrollable screen. Therefore, the second object is not displayed irrespective of the area ratio of the region that functions as the first object to the displaying part of the screen 70.

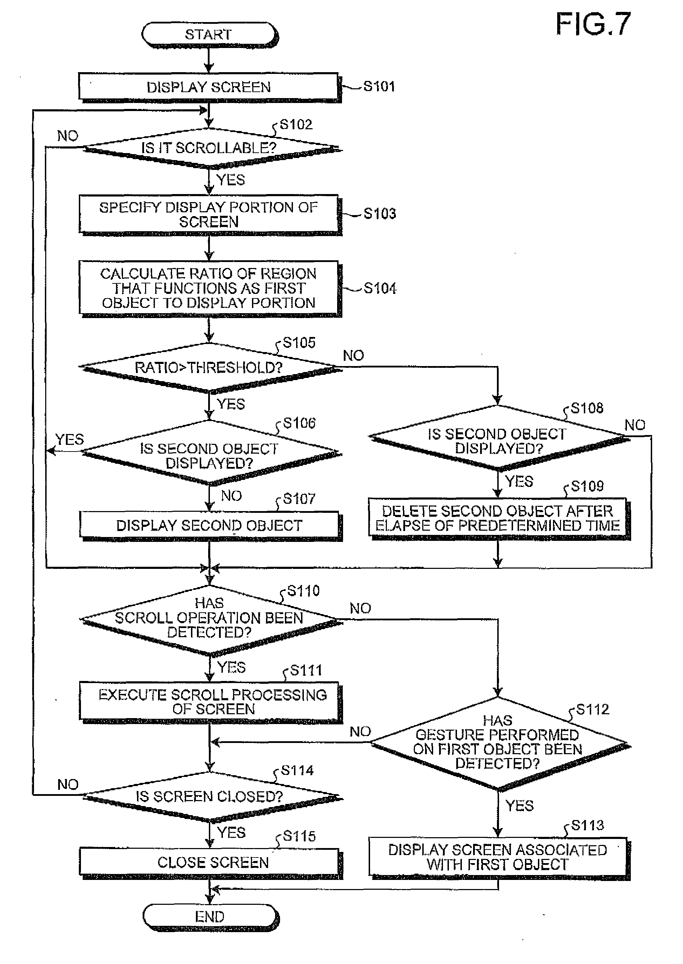

The procedure of the display control performed by the smartphone 1 will be explained with reference to FIG. 7. FIG. 7 is a flowchart of an example of the procedure of the display control performed by the smartphone 1. The procedure in FIG. 7 is implemented by the controller 10 executing the control program 9A. The procedure in FIG. 7 is executed when the controller 10 causes the display 2A to display the screen.

As illustrated in FIG. 7, at Step S101, the controller 10 of the smartphone 1 causes the display 2A to display the screen. At this step, the screen is not being scrolled. At Step S102, the controller 10 determines whether the screen is scrollable. When the screen is scrollable (Yes at Step S102), the controller 10 proceeds to Step S103. When the screen is not scrollable (No at Step S102), the controller 10 proceeds to Step S110.

At Step S103, the controller 10 specifies the displaying part of the screen. At Step S104, the controller 10 calculates an area ratio of the region 46 that functions as the first object to the displaying part of the screen.

Subsequently, at Step S105, the controller 10 determines whether the area ratio of the region 46 that functions as the first object to the displaying part of the screen is larger than the threshold. When the ratio is larger than the threshold (Yes at Step S105), the controller 10 proceeds to Step S106.

At Step S106, the controller 10 determines whether the second object is displayed. When the second object is not displayed (No at Step S106), the controller 10 proceeds to Step S107. At Step S107, the controller 10 causes the display 2A to display the second object, and thereafter proceeds to Step S110. The controller 10 may cause the display 2A to display the second object after elapse of a predetermined time. When the second object is displayed (Yes at Step S106), the controller 10 proceeds to Step S110 while displaying the second object.

When the area ratio of the region 46 that functions as the first object to the displaying part of the screen is not larger than the threshold (No at Step S105), the controller 10 proceeds to Step S108. At Step S108, the controller 10 determines whether the second object is displayed. When the second object is displayed (Yes at Step S108), the controller 10 proceeds to Step S109. At Step S109, the controller 10 deletes the second object from the display 2A after elapse of a predetermined time, and proceeds to Step S110. When the second object is not displayed (No at Step S108), the controller 10 proceeds to Step S110 without display of the second object.

At Step S110, the controller 10 determines whether the scroll operation has been detected. For example, the controller 10 detects a flick or a drag in a scrollable direction of the screen as a scroll operation. Moreover, the controller 10 detects a predetermined gesture performed on the second object as a scroll operation.

When the scroll operation has been detected (Yes at Step S110), the controller 10 proceeds to Step S111. At Step S111, the controller 10 performs scroll processing on the screen according to the detected scroll operation. When the scroll of the screen 45 is complete, the controller 10 proceeds to Step S114.

When the scroll operation has not been detected (No at Step S110), the controller 10 proceeds to Step S112. At Step S112, the controller 10 determines whether the predetermined gesture performed on the first object has been detected.

When the predetermined gesture performed on the first object has been detected (Yes at Step S112), the controller 10 proceeds to Step S113. At Step S113, the controller 10 causes the display 2A to display the screen associated with the first object. After the display of the screen, the controller 10 ends the procedure in FIG. 7. When the predetermined gesture performed on the first object has not been detected (No at Step S112), the controller 10 proceeds to Step S114.

At Step S114, the controller 10 determines whether the screen is closed. For example, when an operation for closing the screen has been detected, the controller 10 determines that the screen is closed. When it is determined that the screen is closed (Yes at Step S114), the controller 10 proceeds to Step S115. At Step S115, the controller 10 closes the displayed screen and ends the procedure in FIG. 7, When it is determined that the screen is not closed (No at Step S114), the controller 10 returns to Step S102.

Some embodiments disclosed in the present application can be modified without departing the gist and the scope of the invention. Moreover, Some embodiments and modifications thereof disclosed in the present application can be combined with each other if necessary. For example, some embodiment may be modified as follows.

For example, the programs illustrated in FIG. 4 may be divided into a plurality of modules, or may be combined with any other program.

In above embodiments, the smartphone has been explained as an example of the electronic device with the touch screen; however, the electronic device according to the appended claims is not limited to the smartphone. The electronic device according to the appended claims may be a mobile electronic device other than the smartphone. Examples of the mobile electronic devices include, but are not limited to, mobile phones, tablets, mobile personal computers, digital cameras, media players, electronic book readers, navigators, and gaming devices. The electronic device according to the appended claims may be a stationary-type electronic device. Examples of the stationary-type electronic devices include, but are not limited to, desktop personal computers, automatic teller machines (ATM), and television receivers.

above embodiments has explained the case where the smartphone 1 displays the second object when the area ratio of the region 46 that functions as the first object to the displaying part of the scrollable screen is larger than the threshold. However, conditions for displaying the second object are not limited thereto. For example, the smartphone 1 may display the second object when the first object is included in the displaying part of the scrollable screen irrespective of the area ratio of the region 46 that functions as the first object. Alternatively, the smartphone 1 may be configured to display the second object when the first object is included in an area, of the displaying part of the scrollable screen, which is more likely to be used by the scroll operation. Alternatively, the smartphone 1 may be configured to display the second object when the area ratio of the region 46 that functions as the first object to the area more likely to be used by the scroll operation, of the displaying part of the scrollable screen, is larger than the threshold. The area more likely to be used by the scroll operation is, for example, an area of a predetermined size on the side closer to the dominant hand of the user.

In above embodiments, when the second object is displayed during scrolling, the smartphone 1 maintains the state of displaying the second object for the predetermined time even after the completion of the scroll. However, the smartphone 1 may delete the second object immediately when the scrolling is completed and when the area ratio of the region 46 that functions as the first object to the displaying part is not high.

Above embodiments has explained an example where the smartphone 1 displays the scroll bar 60 as the second object on the right side of the screen 45; however, the position where the second object is displayed is not limited thereto. The smartphone 1 may display the second object, for example, near the center of the screen 45 or on the left side thereof.

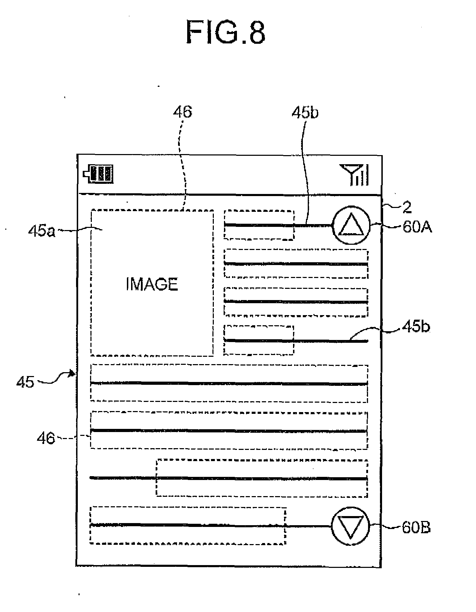

Above embodiments has explained an example in which, in the smartphone 1, the second object is the scroll bar 60; however, the second object is not limited to the scroll bar 60. FIG. 8 is a diagram of a first modification of the second object. In an example of FIG. 8, the second object is a button 60A displayed on the upper right side of the screen 45 and a button 60B displayed on the lower right side thereof. The smartphone 1 displays the buttons 60A and 60B on the display 2A when the screen 45 is scrollable and the area ratio of the region 46 that functions as the first object to the displaying part is high. The button 60A is used to scroll up the screen 45. The button 60B is used to scroll down the screen 45.

When detecting a tap on the button 60A or the button 60B, the smartphone 1 scrolls up or down the screen 45 by a predetermined amount of movement. When the button 60A or the button 60B detects a long touch, the smartphone 1 scrolls up or down the screen 45 until the release is detected.

The positions of the buttons 60A and 60B located on the screen 45 are not limited to an example illustrated in FIG. 8. The buttons 60A and 60B may be located in arbitrary positions on the screen 45. The buttons 60A and 60B may move on the screen 45 according to a user's operation (for example, drag, or drag after long touch).

Above embodiments has explained an example in which the screen vertically scrolls; however, the scroll direction of the screen is not limited thereto. For example, when the area ratio of the region 46 that functions as the first object to the displaying part of the screen is high, the smartphone 1 may display the second object even if the screen is scrollable in a horizontal direction or in an arbitrary direction.

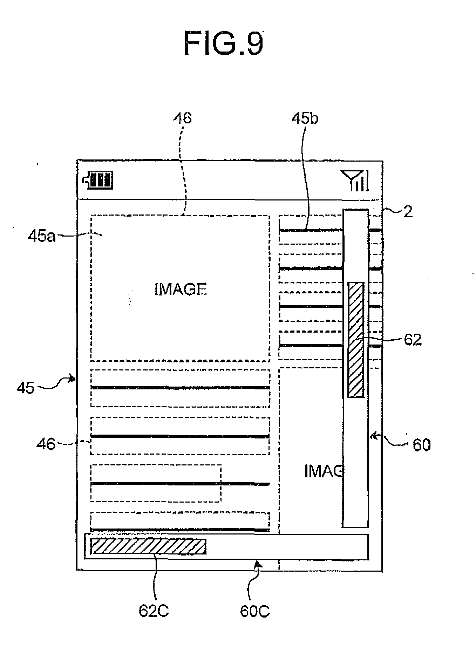

FIG. 9 is a diagram of a second modification of the second object. In an example illustrated in FIG. 9, the second object is scroll bars 60 and 60C. In an example illustrated in FIG. 9, the second object is a screen scrollable in an arbitrary direction. The scroll bar 60 is a vertical scroll bar similar to that of FIG. 5. The scroll bar 60C is a horizontal scroll bar in the screen 45. The scroll bar 60C includes a slider 62C. The slider 62C represents a horizontal position of the displaying part of the screen 45, a ratio of the screen 45 to the whole in the horizontal direction, and the like. When detecting a gesture of horizontally moving the slider 62C of the scroll bar 60C, the smartphone 1 horizontally scrolls the screen 45 in accordance with the displaying position of the slider 62C while changing the displaying position of the slider 62C.

In above embodiments, the second object has been illustrated as an opaque object; however, the display mode of the second object is not limited thereto. Part or whole of the second object may be transparent. The visibility of the screen can be improved by making part or whole of the second object transparent.

Although the art of appended claims has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

### Reference Signs List

1 SMARTPHONE
2 TOUCH SCREEN DISPLAY
2A DISPLAY
2B TOUCH SCREEN
3 BUTTON
4 ILLUMINATION SENSOR
5 PROXIMITY SENSOR
6 COMMUNICATION UNIT
7 RECEIVER
8 MICROPHONE
9 STORAGE
9a CONTROL PROGRAM
9B MAIL APPLICATION
9C BROWSER application
9Z SETTING DATA
10 CONTROLLER
11 SPEAKER
12, 13 CAMERA
14 CONNECTOR
15 ACCELERATION SENSOR
16 DIRECTION SENSOR
17 GYROSCOPE
20 HOUSING
40 HOME SCREEN
45 SCREEN
46 REGION
50 ICON 60 SCROLL BAR 70 SCREEN

## Claims

1. An electronic device comprising:
a touch screen display operable to display a scrollable first screen; and
a controller operable to cause the touch screen display to display a second object for scrolling the first screen if a displaying part of the first screen includes first object for displaying a second screen.

2. The electronic device according to claim 1, wherein the controller causes the touch screen display not to display the second object if the displaying part of the first screen does not include the first object.

3. The electronic device according to claim 1, wherein the controller causes the touch screen display to display the second object if a ratio of the first object to the displaying part of the first screen is higher than a threshold.

4. The electronic device according to claim 1, wherein the controller keeps on displaying the second object or keep on not displaying the second object during scroll of the first screen.

5. The electronic device according to claim 4, wherein the controller controls according to the displaying part of the first screen when the scroll of the first screen is stopped.

6. The electronic device according to claim 5, wherein the controller keeps on displaying the second object or keep on not displaying the second object for a certain time period when the scroll of the first screen is stopped.

7. A method of controlling an electronic device including a touch screen display, the method comprising the steps of:
causing the touch screen display to display a scrollable first screen; and
causing the touch screen display to display a second object for scrolling the first screen if a displaying part of the first screen includes a first object for displaying a second screen.

8. A control program of causing an electronic device including a touch screen display to execute a procedure, the procedure comprising the steps of:
causing the touch screen display to display a scrollable first screen; and
causing the touch screen display to display a second object for scrolling the first screen if a displaying part of the first screen includes a first object for displaying a second screen.
